# EUROPÄISCHE PATENTSCHRIFT

(11) **EP 2 060 512 B1**
(45) Veröffentlichungstag und Bekanntmachung des Hinweises auf die Patenterteilung: **23.03.2011**
(21) Anmeldenummer: 07450213.9
(22) Anmeldetag: 26.11.2007
(51) Int. Cl.: B65G 15/60, B65G 21/22, B65G 39/20

(54) **Anlage zur Förderung von Gütern**
Facility for conveying goods
Installation destinée au transport de marchandises

(30) Priorität: 15.11.2007 AT 18552007
(43) Veröffentlichungstag der Anmeldung: 20.05.2009
(73) Patentinhaber: Innova Patent GmbH, 6960 Wolfurt (AT)
(72) Erfinder: Trieb, Herbert, 6911 Lochau (AT)
(74) Vertreter: Hehenberger, Reinhard

(56) Entgegenhaltungen:
- EP-A- 1 338 531
- DE-B- 1 004 543
- GB-A- 959 982

## Beschreibung

Die gegenständliche Erfindung betrifft eine Anlage zur Förderung von Gütern, wie Abraummaterialien, Mineralstoffen u.dgl., von einer Ladestation zu einer Entladestation durch ein von Tragseilen getragenes, in sich geschlossenes Förderband, welches mittels Tragrollen längs Führungsseilen von der Ladestation zur Entladestation bewegt und in der Ladestation sowie in der Entladestation über Umlenktrommeln geführt wird, mit jeweils einer in Bewegungsrichtung des Förderbandes nach der Entladestation und vor der Ladestation befindlichen, an Tragrahmen befestigten Wendevorrichtung für das sich von der Entladestation zur Ladestation bewegende Trum des Förderbandes, welche mit einer wendelförmig verlaufenden Führungsbahn für die Wendung des Förderbandes nach der Entladestation und vor der Ladestation ausgebildet ist.

Bei einer derartigen Anlage, welche z.B. aus der EP 1338531 B1 bekannt ist, bestehen die Wendevorrichtungen aus einem Traggerüst, in welchem sich die wendelförmigen Führungsbahnen für die Wendung des Förderbandes um etwa 180° befinden. Bei der Bewegung des Förderbandes durch diese Wendevorrichtungen hindurch treten jedoch aufgrund der vorgegebenen Dimensionen und der Materialeigenschaften des Förderbandes sowie weiters aufgrund der durch die geförderten Güter auftretenden Belastungen deshalb große Reibungskräfte und ein hierdurch bedingter großer Verschleiß der Führungsbahnen auf, da die in den Wendevorrichtungen befindliche Führungsbahnen jeweils einen vorgegebenen Verlauf aufweisen, weswegen keine Anpassung des Verlaufes der Führungsbahnen an die technischen Gegebenheiten des Förderbandes bzw. der geförderten Güter vorgenommen werden kann.

Der gegenständlichen Erfindung liegt somit die Aufgabe zugrunde, eine Wendevorrichtung zu schaffen, durch welche dieser den bekannten Wendevorrichtungen anhaftende Nachteil vermieden wird. Dies wird erfindungsgemäß dadurch erzielt, dass zwischen den nebeneinander befindlichen Tragrahmen jeweils zwei sich in Längsrichtung des Förderbandes erstreckende Tragbalken für die Führungsbahn vorgesehen sind und dass die Enden der Tragbalken an den Tragrahmen in ihrer Höhenlage ein- und feststellbar sind, wodurch die in der Wendevorrichtung befindliche Führungsbahn an die technischen Gegebenheiten, wie die Dimensionen und die Eigenschaften des Förderbandes, die durch das Ladegut auftretenden Belastungen des Förderbandes u.dgl., anpassbar ist.

Vorzugsweise ist die Wendevorrichtung mit mindestens zwei Tragrahmen, vorzugsweise mit mindestens drei Tragrahmen, ausgebildet, von welchen die Führungsbahn getragen ist. Weiters sind vorzugsweise an zwei einander zugeordneten Tragbalken voneinander im Abstand befindliche Tragplatten für die Führungsbahn befestigt.

Nach einer weiteren bevorzugten Ausführungsform sind die Tragplatten mit einer angenähert kreisförmigen Ausnehmung ausgebildet, an deren Rand sich die Führungsbahn in Form von angenähert diametral angeordneten Führungen, wie Schienen, Stangen od.dgl., befindet, wobei diese Führungen angenähert wendelförmig verlaufen. Dabei befinden sich im Bereich der Wendevorrichtung die dem sich zur Ladestation zurückbewegenden Trum des Förderbandes zugeordneten Führungsseile im Abstand von den Führungen. Weiters sind vorzugsweise dem sich zur Ladestation zurückbewegenden Trum des Förderbandes am Beginn und am Ende der Wendevorrichtung Leiteinrichtungen, wie Tragleisten od.dgl., zugeordnet, mittels welcher die Tragrollen von den Führungsseilen zur Führungsbahn geleitet werden.

Der Gegenstand der Erfindung ist nachstehend anhand eines in der Zeichnung dargestellten Ausführungsbeispieles näher erläutert. Es zeigen:
- FIG.1: eine anmeldungsgemäße Wendevorrichtung, in axonometrischer Darstellung;
- FIG. 1a: den in Bewegungsrichtung des sich von der Entladestation zur La- destation bewegenden Trumes des Förderbandes vorderen Teil der Wendevorrichtung nach FIG. 1, in gegenüber dieser vergrößertem Maßstab;
- FIG.2 und FIG. 2a: Details der Wendevorrichtung, in Draufsicht und in axonometri- scher Darstellung;
- FIG.3 und FIG. 3a: den in Bewegungsrichtung des sich von der Entladestation zur La- destation bewegenden Trumes des Förderbandes vorderen Teil die- ser Wendevorrichtung in einer ersten Betriebsstellung des Förder- bandes, in Seitenansicht und im Schnitt nach der Linie IIIa-IIIa der FIG.3;
- FIG.4 und FIG.4a: den in Bewegungsrichtung des sich von der Entladestation zur La- destation bewegenden Trumes des Förderbandes vorderen Teil die- ser Wendevorrichtung in einer zweiten Betriebsstellung des Förder- bandes, in Seitenansicht sowie im Schnitt nach der Linie IVa-IVa der FIG.4;
- FIG.5 und FIG.5a: den in Bewegungsrichtung des sich von der Entladestation zur La- destation bewegenden Trumes des Förderbandes mittleren Teil die- ser Wendevorrichtung, in Seitenansicht und im Schnitt nach der Linie Va-Va der FIG.5, sowie
- FIG.6 und FIG.6a: den in Bewegungsrichtung des sich von der Entladestation zur La- destation bewegenden Trumes des Förderbandes hinteren Teil die- ser Wendevorrichtung, in Seitenansicht und im Schnitt nach der Linie VIa-VIa der FIG.6.

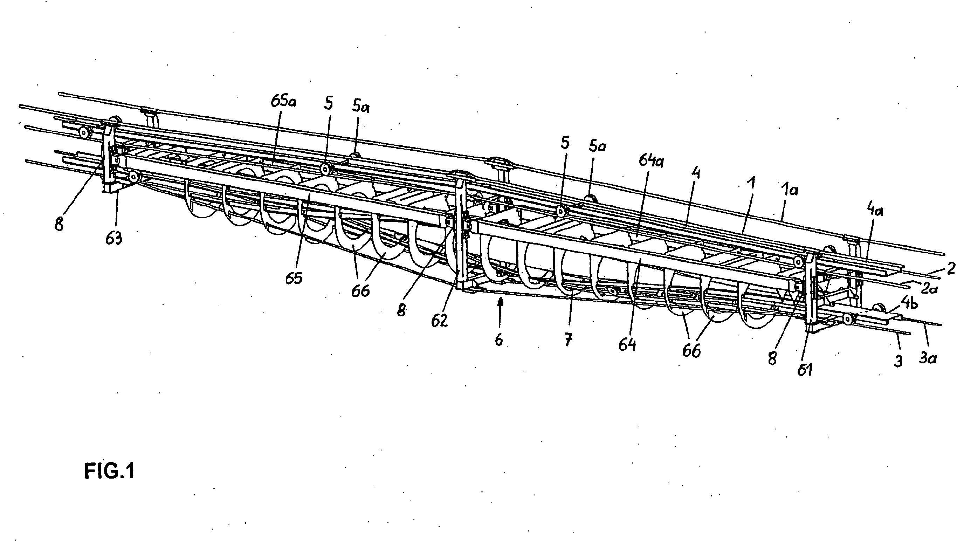

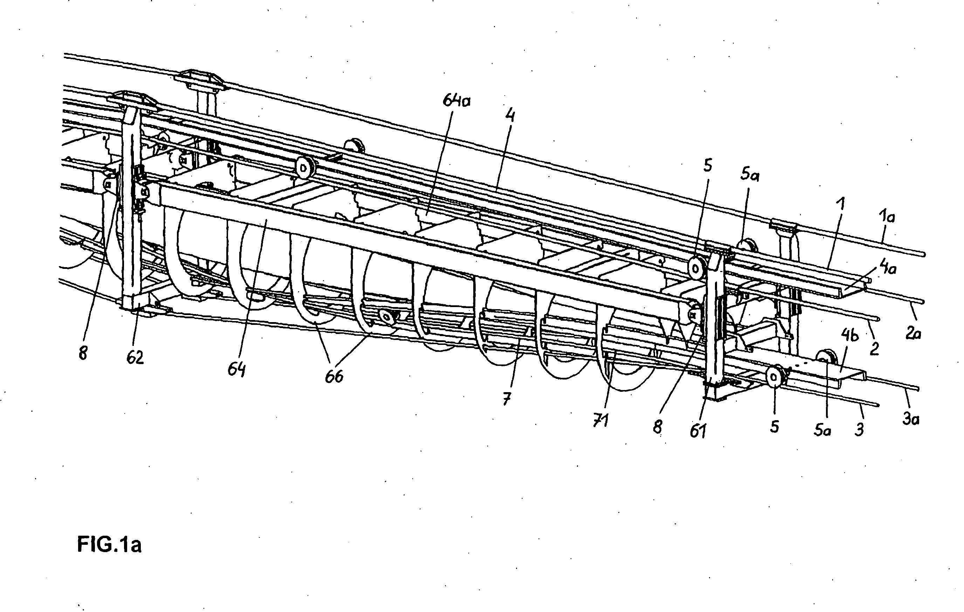

In FIG. 1 ist eine Wendevorrichtung für das sich von der Entladestation zur Ladestation bewegende Trum des Förderbandes einer Anlage zur Förderung von Gütern dargestellt. Wie dies aus den FIG. 1 und FIG. 1a ersichtlich ist, befinden sich in dieser Förderanlage zwei Tragseile 1 und 1a, von welchen über den Verlauf dieser Anlage mittels voneinander im Abstand befindlichen Tragrahmen jeweils zwei Führungsseile 2, 2a und 3, 3a getragen sind. Längs dieser Führungsseile 2, 2a und 3, 3a ist ein Förderband 4 bewegt, wobei dessen oberes Trum 4a längs der beiden oberen Führungsseile 2, 2a und dessen unteres Trum 4b längs der beiden unteren Führungsseile 3, 3a bewegt wird. Hierfür ist das Förderband 4 mit Tragrollen 5, 5a ausgebildet, welche längs der Führungsseile 2, 2a und 3, 3a abrollen.

Die Wendevorrichtung 6 weist drei Tragrahmen 61, 62 und 63 auf, welche an den Tragseilen 1 und 1a befestigt sind. Weiters weist die Wendevorrichtung 6 sich zwischen den drei Tragrahmen 61, 62 und 63 erstreckende Tragbalken 64, 64a und 65, 65a auf, an welchen sich in Bewegungsrichtung des Förderbandes 4 voneinander im Abstand befindliche Tragplatten 66 für eine sich längs der Wendevorrichtung 6 wendelförmig verlaufende Führungsbahn 7 befestigt sind. Die Führungsbahn 7 besteht aus zwei diametral zueinander angeordneten Paaren von Führungsschienen, welche sich innerhalb von in den Tragplatten 66 befindlichen Ausnehmungen in Bewegungsrichtung des unteren Trumes 4b des Förderbandes 4 in einem wendelförmigen Verlauf erstrecken.

In Bewegungsrichtung A des unteren Trumes 4b des Förderbandes 4 laufen die Tragrollen 5, 5a längs der beiden unteren Führungsseile 3, 3a in die Wendevorrichtung 6 ein, wobei sie auf die Führungsschienen gelangen. Im weiteren Verlauf der Bewegungsbahn wird das untere Trum 4b des Förderbandes 4 aufgrund des wendelförmigen Verlaufes der beiden Führungsschienen entgegen dem Uhrzeigersinn um etwa 90° gewendet, wobei es im Bereich des zweiten Tragrahmens 62 eine angenähert vertikale Lage aufweist. Im weiteren Bewegungsverlauf des unteren Trumes 4b des Förderbandes 4 wird dieses zwischen dem zweiten Tragrahmen 62 und dem dritten Tragrahmen 63 aufgrund des wendelförmigen Verlaufes der Führungsschienen um weitere etwa 90° gewendet, wodurch es im Bereich des dritten Tragrahmens 63 um 180° gewendet ist, sodass dessen Ladefläche nach oben gerichtet ist. In weiterer Folge laufen die Tragrollen 5, 5a wieder auf die beiden unteren Tragseile 3, 3a auf und wird das untere Trum 4b des Förderbandes 4 in der nach oben gewendeten Lage zur Ladestation bewegt. Vor der Ladestation ist eine zweite derartige Wendevorrichtung vorgesehen, in welcher das untere Trum 4b des Förderbandes 4 wiederum um 180° gewendet wird, wodurch es mit seiner eben ausgebildeten unteren Fläche über die in der Ladestation befindliche Umlenktrommel geführt werden kann.

Die vorstehend erläuterte Ausbildung einer Förderanlage für Güter mit einem in sich geschlossenen Förderband 4, welches in der Ladestation und in der Entladestation über Umlenktrommeln geführt ist, wobei in Bewegungsrichtung des Förderbandes 4 nach der Entladestation und vor der Ladestation jeweils eine Wendevorrichtung 6 vorgesehen ist sowie die bisher erläuterte Ausbildung der Wendevorrichtung 6 sind aus dem Stand der Technik bekannt.

Bei derartigen Förderanlagen kommen in Abhängigkeit von den geförderten Gütern jeweils Förderbänder mit unterschiedlichen Dimensionen und mit unterschiedlichen mechanischen Eigenschaften zur Anwendung. Zudem treten durch unterschiedliche Fördergüter auch unterschiedliche Belastungen auf. Aufgrund dieser unterschiedlichen Betriebsbedingungen entsprechen die bekannten Wendevorrichtungen deshalb nicht den technischen Erfordernissen, da die Führungsbahnen starr angeordnet sind, wodurch im Betrieb von derartigen Anlagen große Reibungskräfte und hierdurch starke Verschleißerscheinungen bedingt werden, weswegen bekannte derartige Wendevorrrichtungen eine relativ kurze Lebensdauer aufweisen.

Um diesen Nachteil zu vermeiden, ist die erfindungsgemäße Wendevorrichtung gegenüber dem bekannten Stand der Technik insofern weiter entwickelt, dass die Führungsbahn in ihrer Lage so einstellbar ist, dass eine Anpassung an die technischen Gegebenheiten der betreffende Wendevorrichtung erfolgen kann. Hierfür sind Stelleinrichtungen 8 vorgesehen, durch welche die zwischen den Tragrahmen 61, 62, 63 befindlichen Tragbalken 64, 64a, 65 und 65a gegenüber den Tragrahmen 61, 62, 63 verstellbar sind, wodurch eine Verstellung der Tragplatten 66 und damit Verstellungen der Führungsbahn 7 dahingehend ermöglicht werden, dass in der Wendevorrichtung 6 eine reibungsarme und damit verschleißarme Bewegung und Wendung des unteren Trumes 4b des Förderbandes 4 erfolgt.

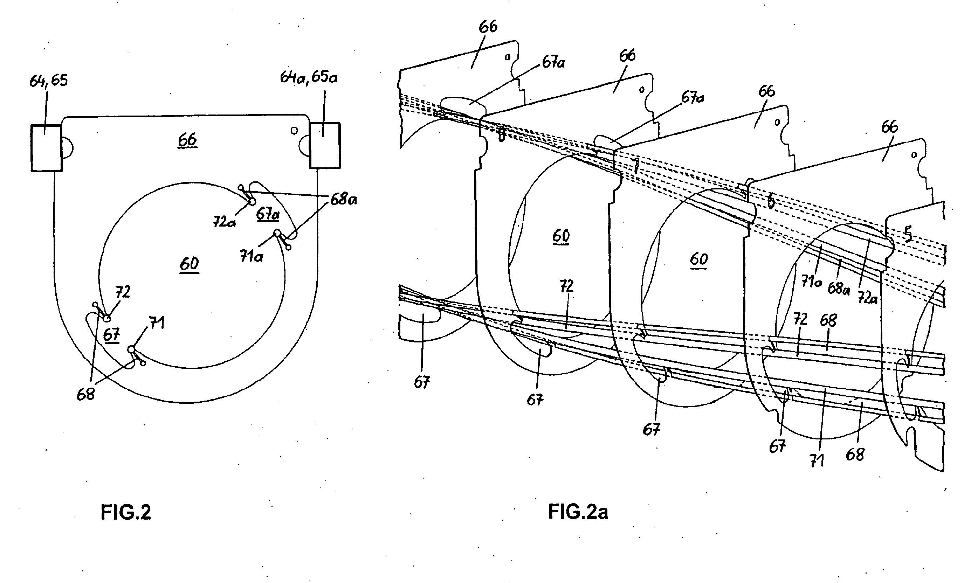

Wie dies weiters aus FIG.2 ersichtlich ist, sind die an den Tragbalken 64, 64a, 65, 65a befestigten Tragplatten 66 mit einer kreisförmigen Ausnehmung 60 ausgebildet, an deren Rand sich diametral zueinander angeordnete, angenähert elliptische Ausnehmungen 67, 67a befinden, welchen jeweils zwei Paare von Führungsschienen 71, 72 und 71a, 72a zugeordnet sind, welche Führungen für die sich dazwischen befindlichen Tragrollen 5 und 5a bilden. Über den Verlauf der Bewegungsbahn sind diese Ausnehmungen 67, 67a gegeneinander jeweils so verdreht, dass die Führungsschienen 71, 72 und 71a, 72a wendelförmig verlaufen. Zur Versteifung dieser Führungsbahn befinden sich weiters zwischen den Tragplatten 66 jeweils Verbindungsstege 68, 68a. Aufgrund dieser Ausbildung der Führungsbahn kann diese mittels der Stelleinrichtungen 8 so verändert werden, dass eine Anpassung an die besonderen technischen Gegebenheiten zur Erzielung einer reibungsarmen Führung möglich ist.

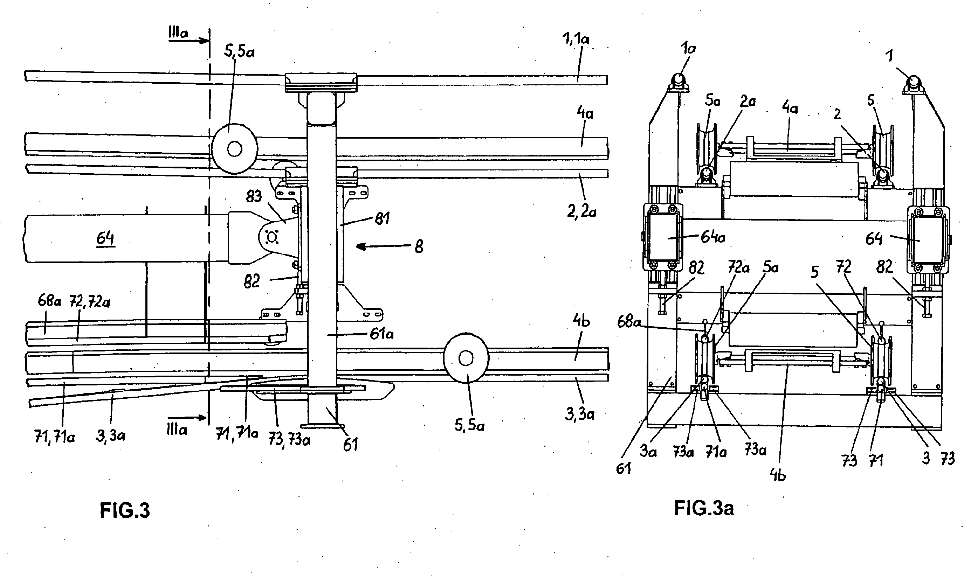

Wie dies aus den FIG.3 und FIG.3a ersichtlich ist, ist die beim Tragrahmen 61 vorgesehene Stelleinrichtung 8 mit einer längs einer der vertikalen Balken 61a des Tragrahmens 61 vertikal verschiebbaren Hülse 81 ausgebildet, welche mittels einer Spindel 82 vertikal verstellbar ist. Die Hülse 81 ist mit einer Lasche 83 versehen, an welche das zugeordnete Ende des Tragbalkens 64 angelenkt ist. Durch eine Verdrehung der Spindel 82 kann somit die Anlenkung des Tragbalkens 64 in ihrer Höhe verstellt werden. In dieser Weise können sämtliche Anlenkpunkte der Tragbalken 64, 64a und 65, 65a gegenüber den Tragrahmen 61, 62 und 63 in ihrer Höhe verstellt werden, wodurch eine Einstellung der Tragplatten 66 und damit der Führungsbahn 7 dahingehend vorgenommen werden kann, dass eine reibungsarme und damit verschleißarme Führung der Tragrollen 5, 5a längs der wendelförmig verlaufenden Führungsschienen 71, 72 und 71a, 72a erfolgt

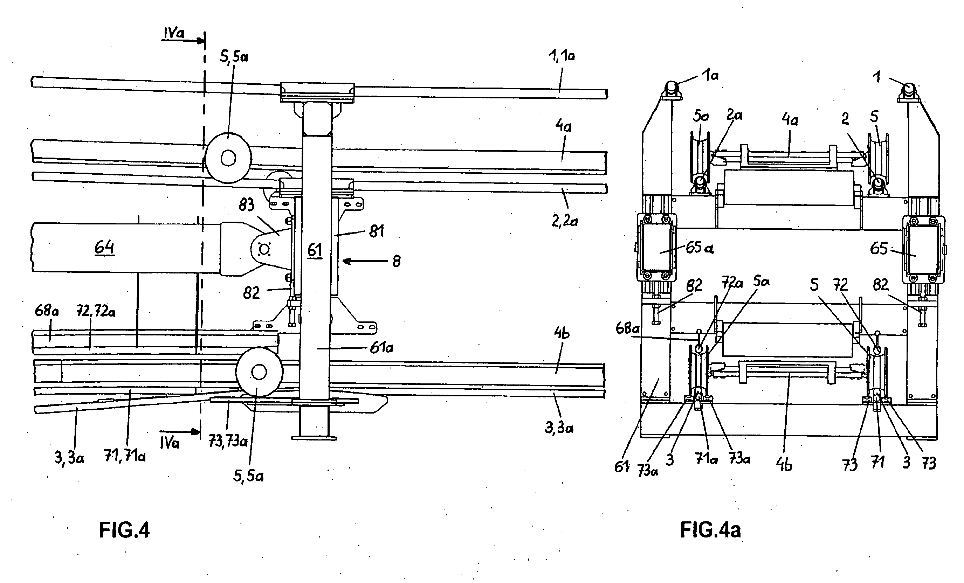

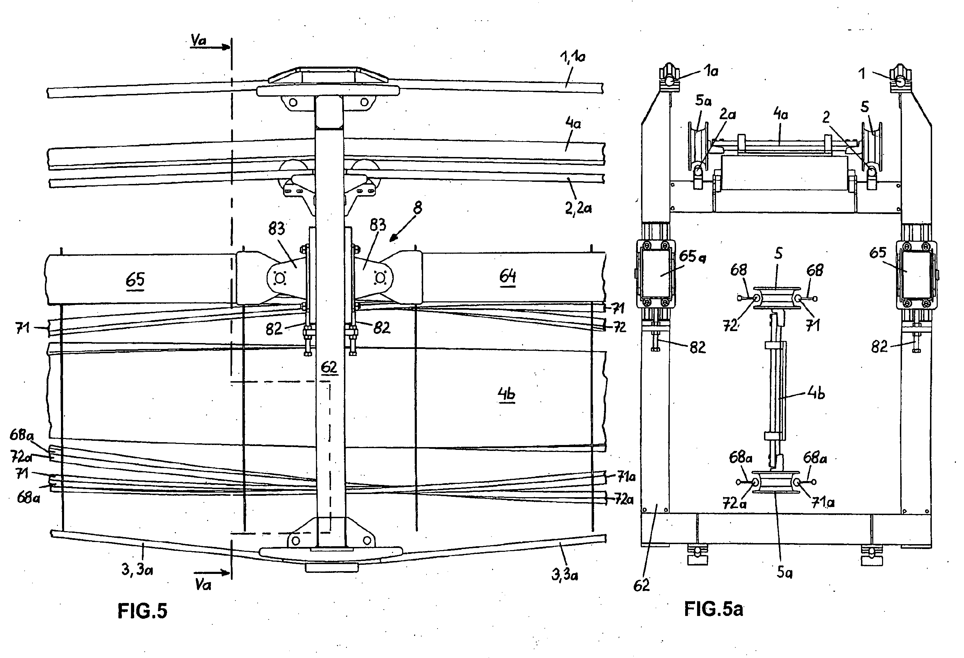

In den FIG.3 und FIG.3a ist eine solche Lage des sich von der Entladestation zur Ladestation zuruckbewegenden Trumes 4b des Förderbandes 4 dargestellt, bei welcher sich die Tragrollen 5, 5a noch auf den zugeordneten Führungsseilen 3, 3a befinden. Nach einer weiteren Bewegung des unteren Trumes 4b des Förderbandes 4, welche in den FIG 4 und FIG. 4a dargestellt ist, laufen die Borde der Tragrollen 5, 5a auf Tragleisten 73, 73a auf. wodurch die Tragrollen 5, 5a von den Führungsseilen 3, 3a abgehoben werden. Im weiteren Bewegungsverlauf des Trumes 4b können die Führungsseile 3, 3a seitlich nach unten abgelenkt werden und laufen die Tragrollen 5, 5a auf die Führungsschienen, 71, 72 und 71a, 72a auf, mittels welcher das untere Trum 4b des Förderbandes 4 bis zum zweiten Tragrahmen 62 hin um etwa 90° gewendet wird. Diese Lage des sich zur Ladestation zurückbewegenden Trumes 4b ist in den FIG.5 und FIG.5a dargestellt.

Wie dies in FIG.5a dargestellt ist, befindet sich das untere Trum 4b des Förderbandes 4 innerhalb des zweiten Tragrahmens 62 in einer angenähert vertikalen Lage, wobei es angestrebt wird, dass sich die Tragrollen 5, 5a zwischen den Führungsschienen 71, 72 und 71a, 72a der Wendevorrichtung 6 mit Spiel befinden, da dann die angestrebte geringstmögliche Reibung in der Bewegung des Trumes 4b durch die Wendevorrichtung 6 hindurch erzielt wird. Diese Lage des Förderbandes 4 wird durch die Verstellung der Tragplatten 66 aufgrund der Verstellung der Tragbalken 64, 64a, 65 und 65a mittels der Stelleinrichtungen 8, welche an allen drei Tragrahmen 61, 62, 63 vorgesehen sind, erzielt.

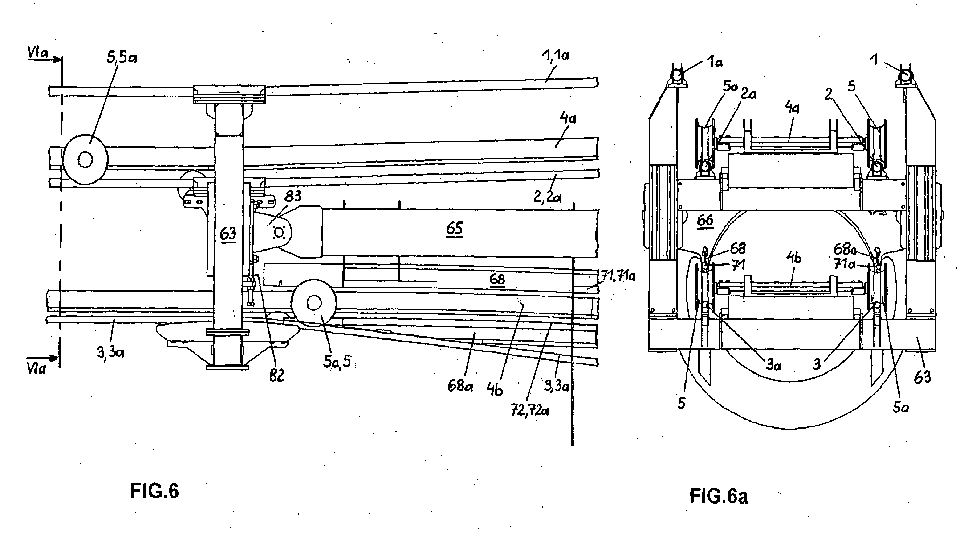

Wie dies aus den FIG.6 und FIG.6a ersichtlich ist, ist im Bereich des dritten Tragrahmens 63 das untere Trum 4b des Förderbandes 4 um 180° gewendet, wodurch dessen Ladefläche nach oben gerichtet ist. In diesem Bereich gelangten die Tragrollen 5, 5a von den Führungsschienen 71, 72 und 71a, 72a wiederum auf die zweiten Führungsseile 3, 3a, längs welcher sie in weiterer Folge bis zu der vor der Ladestation befindlichen zweiten Wendevorrichtung geführt werden.

Beim vorstehend erläuterten Ausführungsbeispiel einer erfindungsgemäßen Förderanlage ist die nach der Entladestation vorgesehene Wendevorrichtung 6 an den Tragseilen 1, 1a der Förderanlage befestigt. In gleicher Weise kann auch die vor der Ladestation befindliche Wendevorrichtung 6 an den Tragseilen befestigt sein. Alternativ dazu können eine oder beide Wendevorrichtungen an in den Bereichen der Entladestation und der Ladestation befindlichen Traggerüsten angeordnet sein.

Zudem kann auch eine größere Anzahl von Tragrahmen vorgesehen sein.

Im geschilderten Ausführungsbeispiel ist weiters die in der Wendevorrichtung befindliche Führungsbahn durch zwei wendelförmig verlaufende Paare von Führungsstangen gebildet. Die Führungsbahn kann jedoch auch in anderer Weise ausgebildet sein. Maßgeblich für die erfindungsgemäße konstruktive Gestaltung ist, dass die sich in der Wendevorrichtung befindlichen Führungen in ihrer Lage verstellbar sind, um hierdurch eine Anpassung an die technischen Gegebenheiten zur Erzielung einer Führung mit einer möglichst geringen Reibung und damit einen möglichst geringen Leistungsbedarf und einen möglichst geringen Verschleiß zu erzielen.

## Patentansprüche

1. Anlage zur Förderung von Gütern, wie Abraummaterialien, Mineralstoffen u.dgl., von einer Ladestation zu einer Entladestation mittels eines von Tragseilen (1, 1a) getragenen, in sich geschlossenen Förderbandes (4), welches mittels Tragrollen (5, 5a) längs Führungsseilen (2, 2a, 3, 3a) von der Ladestation zur Entladestation bewegt und in der Ladestation sowie der Entladestation über Umlenktrommeln geführt wird, mit jeweils einer in der Bewegungsrichtung des Förderbandes (4) nach der Entladestation und vor der Ladestation befindlichen, an Tragrahmen (61, 62, 63) befestigten Wendevorrichtung (6) für das sich zur Ladestation bewegende Trum (4b) des Förderbandes (4), welche mit einer wendelförmig verlaufenden Führungsbahn (7) für die Wendung des Förderbandes (4) nach der Entladestation und vor der Ladestation ausgebildet ist, **dadurch gekennzeichnet, dass** zwischen den nebeneinander befindlichen Tragrahmen (61, 62, 63) jeweils zwei sich in Längsrichtung des Förderbandes (4) erstreckende Tragbalken (64, 64a, 65, 65a) für die Führungsbahn (7) vorgesehen sind und dass die Enden der Tragbalken (64, 64a 65, 65a) an den Tragrahmen (61, 62, 63) in ihrer Höhenlage ein- und feststellbar sind, wodurch die in der Wendevorrichtung (6) befindliche Führungsbahn (7) an die technischen Gegebenheiten, wie die Dimensionen und die Eigenschaften des Förderbandes (4), die durch das Ladegut auftretenden Belastungen des Förderbandes (4) u.dgl., anpassbar ist.

2. Anlage nach Patentanspruch 1, **dadurch gekennzeichnet, dass** die Wendevorrichtung (6) mit mindestens zwei Tragrahmen, vorzugsweise mit mindestens drei Tragrahmen, (61, 62, 63), ausgebildet ist, von welchen die Führungsbahn (7) getragen ist.

3. Anlage nach einem der Patentansprüche 1 und 2, **dadurch gekennzeichnet, dass** an zwei einander zugeordneten Tragbalken (64, 64a, 65, 65a) voneinander im Abstand befindliche Tragplatten (66) für die Führungsbahn (7) befestigt sind.

4. Anlage nach Patentanspruch 3, **dadurch gekennzeichnet, dass** die Tragplatten (66) mit einer angenähert kreisförmigen Ausnehmung (60) ausgebildet sind, an deren Rand sich die Führungsbahn (7) in Form von zwei angenähert diametral angeordneten Führungen, wie Paare von Schienen, Stangen (71, 72, 71a, 72a) od.dgl., befindet, welche angenähert wendelförmig verlaufen.

5. Anlage nach einem der Patentansprüche 1 bis 4, **dadurch gekennzeichnet, dass** im Bereich der Wendevorrichtung (6) die dem sich zur Ladestation zurückbewegenden Trum (4b) des Förderbandes (4) zugeordneten Führungsseile (3, 3a) sich im Abstand von den Führungen befinden.

6. Anlage nach einem der Patentansprüche 1 bis 5, **dadurch gekennzeichnet, dass** dem sich zur Ladestation zurückbewegenden Trum (4b) des Förderbandes (4) am Beginn und am Ende der Wendevorrichtung (6) Leiteinrichtungen, wie Tragleisten (73, 73a), od.dgl. zugeordnet sind, mittels welcher die Tragrollen (5, 5a) von den Führungsseilen (3, 3a) zur Führungsbahn (7) geleitet werden.

## Claims

1. An installation for conveying goods, such as excavated material, mineral substances and the like, from a loading station to a discharge station by means of an endless conveyor belt (4) supported by supporting cables (1, 1a), which belt (4) moves by means of supporting rollers (5, 5a) along guide cables (2, 2a, 3, 3a) from the loading station to the discharge station and is guided in the loading station and the discharge station over return drums, having in each case a turning device (6), situated after the discharge station and before the loading station in the direction of movement of the conveyor belt (4) and attached to supporting frames (61, 62, 63), for the run (4b) moving towards the loading station of the conveyor belt (4), which turning device (6) is provided with a helically extending guideway (7) for turning over the conveyor belt (4) after the discharge station and before the loading station, **characterised in that** between the supporting frames (61, 62, 63) situated next to one another there are in each case provided two supporting beams (64, 64a, 65, 65a), extending in the longitudinal direction of the conveyor belt (4), for the guideway (7) and **in that** the ends of the supporting beams (64, 64a, 65, 65a) may be vertically adjusted on and fastened to the supporting frames (61, 62, 63), whereby the guideway (7) situated in the turning device (6) may be adapted to technical circumstances, such as the dimensions and characteristics of the conveyor belt (4), the loads on the conveyor belt (4) resulting from the goods carried thereon and the like.

2. An installation according to claim 1, **characterised in that** the turning device (6) is provided with at least two supporting frames, preferably with at least three supporting frames, (61, 62, 63), which support the guideway (7).

3. An installation according to either one of claims 1 and 2, **characterised in that** mutually spaced supporting plates (66) for the guideway (7) are attached to two mutually associated supporting beams (64, 64a, 65, 65a).

4. An installation according to claim 3, **characterised in that** the supporting plates (66) are provided with an approximately circular opening (60), at the edge of which the guideway (7) is situated in the form of two approximately diametrically arranged guides, such as pairs of rails, rods (71, 72, 71a, 72a) or the like, which extend approximately helically.

5. An installation according to any one of claims 1 to 4, **characterised in that** in the region of the turning device (6) the guide cables (3, 3a) associated with the run (4b) of the conveyor belt (4) returning to the loading station are situated at a distance from the guides.

6. An installation according to any one of claims 1 to 5, **characterised in that** the run (4b) of the conveyor belt (4) returning to the loading station is associated at the start and the end of the turning device (6) with guiding means, such as supporting bars (73, 73a) or the like, by means of which the supporting rollers (5, 5a) are guided from the guide cables (3, 3a) to the guideway (7).

## Revendications

1. Installation pour le transport de produits tels que des déblais, des substances minérales et autres, d'une station de chargement jusqu'à une station de déchargement à l'aide d'un convoyeur à bande (4) sans fin qui est porté par des câbles porteurs (1, 1a), qui est déplacé de la station de chargement jusqu'à la station de déchargement le long de câbles de guidage (2, 2a, 3, 3a) à l'aide de galets porteurs (5, 5a) et qui passe, dans la station de chargement comme dans la station de déchargement, sur des tambours de renvoi avec chacun un dispositif de retournement (6) qui est fixé à des cadres porteurs (61, 62, 63), qui se trouve après la station de déchargement et avant la station de chargement, dans le sens de déplacement du convoyeur à bande (4), pour le brin (4b) dudit convoyeur (4) qui se déplace vers la station de chargement, et qui est pourvu d'une glissière hélicoïdale (7) pour retourner le convoyeur à bande (4) après la station de déchargement et avant la station de chargement, **caractérisée en ce qu'**il est prévu à chaque fois, entre les cadres porteurs (61, 62, 63) disposés côte à côte, deux poutres porteuses (64, 64a, 65, 65a) pour la glissière (7), qui s'étendent dans le sens longitudinal du convoyeur à bande (4), et **en ce que** les extrémités des poutres porteuses (64, 64a, 65, 65a) sont aptes à être réglées et bloquées en hauteur sur les cadres porteurs (61, 62, 63), moyennant quoi la glissière (7) qui se trouve dans le dispositif de retournement (6) est apte à être adaptée aux conditions techniques telles que les dimensions et les caractéristiques du convoyeur à bande (4), les contraintes apparaissant sur le convoyeur à bande (4) en raison du chargement, etc.

2. Installation selon la revendication 1, **caractérisée en ce que** le dispositif de retournement (6) est pourvu d'au moins deux cadres porteurs, de préférence d'au moins trois cadres porteurs (61, 62, 63) par lesquels la glissière (7) est portée.

3. Installation selon l'une des revendications 1 et 2, **caractérisée en ce que** des plaques porteuses (66) pour la glissière (7) sont fixées, à une certaine distance les unes des autres, à deux poutres porteuses (64, 64a, 65, 65a) associées l'une à l'autre.

4. Installation selon la revendication 3, **caractérisée en ce que** les plaques porteuses (66) sont pourvues d'un creux (60) à peu près circulaire sur le bord duquel se trouve la glissière (7), sous la forme de deux guides à peu près diamétralement opposés, comme des paires de rails, de barres (71, 72, 71a, 72a) ou autres qui s'étendent à peu près suivant une forme hélicoïdale.

5. Installation selon l'une des revendications 1 à 4, **caractérisée en ce que** dans la zone du dispositif de retournement (6), les câbles de guidage (3, 3a) associés au brin (4b) du convoyeur (4) qui revient vers la station de chargement se trouvent à une certaine distance des guides.

6. Installation selon l'une des revendications 1 à 5, **caractérisée en ce qu'**il est prévu, associés au brin (4b) du convoyeur à bande (4) qui revient vers la station de chargement, au début et à la fin du dispositif de retournement (6), des dispositifs déflecteurs, tels que des barres porteuses (73, 73a) ou autres, qui font passer les galets porteurs (5, 5a) des câbles de guidage (3, 3a) à la glissière (7).
